Europäisches Patentamt

European Patent Office

Office européen des brevets

(19)

(11) **EP 0 822 959 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(21) Anmeldenummer: **96914115.9**

(22) Anmeldetag: **25.04.1996**

(51) Int Cl.⁶: **C08K 9/04**, C09D 5/38, C09D 5/10

(86) Internationale Anmeldenummer:
**PCT/EP96/01717**

(87) Internationale Veröffentlichungsnummer:
**WO 96/34046 (31.10.1996 Gazette 1996/48)**

(54) **OBERFLÄCHENBEHANDELTE METALLPULVER UND DEREN VERWENDUNG IN WÄSSRIGEN BESCHICHTUNGSZUSAMMENSETZUNGEN**

SURFACE-TREATED METALLIC POWDERS AND THEIR USE IN AQUEOUS COATING COMPOSITIONS

POUDRES METALLIQUES A SURFACE TRAITEE ET LEUR UTILISATION DANS DES COMPOSITIONS AQUEUSES DE PEINTURES

(84) Benannte Vertragsstaaten:
**AT BE DE FI FR GB IT NL SE**

(30) Priorität: **27.04.1995 DE 19515538**

(43) Veröffentlichungstag der Anmeldung:
**11.02.1998 Patentblatt 1998/07**

(73) Patentinhaber: **Wacker-Chemie GmbH**
**81737 München (DE)**

(72) Erfinder:
• **LAUBENDER, Thomas**
**D-84489 Burghausen (DE)**
• **FRANKE, Petra**
**D-84489 Burghausen (DE)**
• **GELTINGER, Magdalena**
**D-84533 Haiming (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
DE-A- 4 235 323     GB-A- 945 799
US-A- 3 918 984     US-A- 3 926 874
US-A- 4 138 270

• **DATABASE WPI Derwent Publications Ltd.,**
**London, GB; AN 80-19430c XP002010470 &**
**JP,A,55 016 036 (NIPPON OILS & FATS KK.) ,**
**4.Februar 1980**

## Beschreibung

Die Erfindung betrifft oberflächenbehandelte Metallpulver, deren Herstellung und deren Verwendung in wäßrigen Beschichtungszusammensetzungen, insbesondere in wäßrigen, Organosiliciumverbindungen enthaltenden, Beschichtungszusammensetzungen.

Wasserlacke werden gegenüber den lösemittelhaltigen Lacken aufgrund ihrer geringeren Umweltbelastung vermehrt eingesetzt.

Metallpulver enthaltende Beschichtungszusammensetzungen, wie Lacke, sind bekannt. Zinkpulver enthaltende Lacke werden beispielsweise als Korrosionsschutzmittel verwendet. Wäßrige Beschichtungszusammensetzungen, die Zinkpulver enthalten, sind ebenfalls bekannt. Der Einsatz von wäßrigen Systemen hat aber den Nachteil, daß Zinkpulver mit Wasser unter Bildung von Wasserstoff reagiert, was zu einer Explosion führen kann.

In der Broschüre "Silikophen® P40/W", Tego Chemie Service USA, Oktober 1989, ist Silikophen® P40/W, eine wäßrige Phenylmethylsiliconharzemulsion mit einem 50 %igen Feststoffgehalt, als Bindemittel für Zinkstaub beschrieben.

In DE-A 42 35 323 sind wäßrige, Organosiliciumverbindungen enthaltende Beschichtungszusammensetzungen beschrieben, die

(A) wäßrige Bindemittel enthaltend

    (a) Organopolysiloxanharze,
    (b) Monoorganosilanolate und/oder dessen durch Wasserabspaltung entstehende Kondensationsprodukte,
    (c) Wasser,

(B) Metallpulver, wie Zinkpulver,

(C) gegebenenfalls Siliciumdioxide mit einer BET-Oberfläche von mindestens 50 $m^2/g$, die gegebenenfalls hydrophobiert sind, und

(D) gegebenenfalls Wasser

enthalten.

Die wäßrigen Beschichtungszusammensetzungen haben den Nachteil, daß sie einerseits bei geringer Zugabe von Monoorganosilanolaten (b) zwar eine verminderte Wasserstoffbildung zeigen, dafür aber lange Trocknungszeiten und zusätzlich ungenügende Lösungsmittel- und Wasserbeständigkeiten aufweisen, andererseits bei höherer Zugabemenge von Monoorganosilanolaten (b) sich die Trocknungszeiten und Beständigkeiten gegen Wasser und Lösungsmittel zwar verbessern, dafür aber eine verstärkte Wasserstoffbildung durch das Ansteigen des pH-Wertes auftritt.

Gegenstand der Erfindung ist die Verwendung der mit nichtionischen Emulgatoren oberflächenbehandelte Metallpulver durch Vermischen von Gemischen von Metallpulver und Lösungsmitteln mit Emulgatoren, Abtrennen der Lösungsmittel und Trocknen der so erhaltenen oberflächenbehandelten Metallpulver in wäßrigen Organosiliciumverbindungen enthaltenden Beschichtungszusammensetzungen.

Als Metallpulver, deren Oberflächen behandelt werden, werden vorzugsweise Zinkpulver, Aluminiumpulver, Stahlpulver, Kupferpulver oder Siliciumpulver verwendet. Bevorzugt werden Zinkpulver, insbesondere solche mit einer durchschnittlichen Korngröße von 3 bis 20 $\mu m$, wobei die Zinkpartikel kugelförmig oder plättchenförmig sein können, verwendet.

Als nichtionische Emulgatoren, mit denen die Oberflächen der Metallpulver behandelt werden, werden vorzugsweise Fettalkoholpolyglykolether und (partielle) Fettsäureester mehrwertiger Alkohole verwendet.

Beispiele für Fettalkoholpolyglykolether sind solche der Formel $X-CH_2-O(C_2H_4-O)_n-H$, wobei X einen einwertigen Kohlenwasserstoffrest mit 7 bis 29, bevorzugt 11 bis 21 Kohlenstoffatomen je Rest und n eine ganze Zahl von 1 bis 50, bevorzugt 6 bis 18, bedeutet. Ein bevorzugtes Beispiel für einen Fettalkohol $X-CH_2-OH$, der dem Fettalkoholpolyglykolether zugrundeliegt, ist Isotridecylalkohol.

Bevorzugte Beispiele für Fettalkoholpolyglykolether sind Isotridecyl-(16)-polyglykolether und Isotridecyl-(10)-polyglykolether, die unter dem Handelsnamen Arlypon[R] IT 16 bzw. Arlypon[R] IT 10 bei der Fa. Grünau käuflich erwerblich sind.

Beispiele für (partielle) Fettsäureester mehrwertiger Alkohole sind solche von Fettsäuren mit 8 bis 30, bevorzugt 12 bis 22 Kohlenstoffatomen, und von mehrwertigen Alkoholen mit 3 bis 6, bevorzugt 4 bis 6, besonders bevorzugt 4 bis 5 Kohlenstoffatomen. Ein bevorzugtes Beispiel für Fettsäuren ist Stearinsäure.

Beispiele für mehrwertige Alkohole sind dreiwertige Alkohole, wie Glycerin, vierwertige Alkohole, wie D-, L- und Meso-Erythrit, besonders bevorzugt Pentaerythrit, fünfwertige Alkohole (Pentite), wie D- und L-Arabit, Adonit und Xylit und sechswertige Alkohole (Hexite), wie D-Sorbit, D-Mannit und Dulcit.

Ein bevorzugtes Beispiel für einen (partiellen) Fettsäureester eines mehrwertigen Alkohols ist Pentaerythritdistearat, der unter dem Handelsnamen Emulgator S bei der Fa. Grünau käuflich erwerblich ist.

Nichtionische Emulgatoren werden bei dem erfindungsgemäßen Verfahren zur Behandlung der Oberfläche von Metallpulvern in Mengen von vorzugsweise 0,1 bis 10 Gew-%, bevorzugt 1,5 bis 4,0 Gew.-%, jeweils bezogen auf das Gesamtgewicht des eingesetzten Metallpulvers, verwendet.

Als Lösungsmittel, die bei dem erfindungsgemäßen Verfahren zur Herstellung der mit nichtionischen Emulgatoren oberflächenbehandelten Metallpulver eingesetzt werden, werden vorzugsweise solche verwendet, in denen sich die nichtionischen Emulgatoren lösen. Beispiele hierfür sind Wasser, Toluol und Xylole.

Lösungsmittel werden dabei in Mengen von vorzugsweise 10 bis 50 Gew.-%, bevorzugt 20 bis 35 Gew.-%, jeweils bezogen auf das Gesamtgewicht des eingesetzten Metallpulvers verwendet.

Bei dem erfindungsgemäßen Verfahren zur Herstellung von mit nichtionischen Emulgatoren oberflächenbehandelten Metallpulvern erfolgt das Abtrennen der Lösungsmittel vorzugsweise durch Filtration, kann aber auch durch Dünnschichtverdampfung erfolgen. Die so erhaltenen oberflächenbehandelten Metallpulver werden vorzugsweise bei Temperaturen von 0 bis 70°C, bevorzugt 20 bis 30°C, und vorzugsweise bei dem Druck der umgebenden Atmosphäre bei ca. 1020hPa getrocknet, können aber auch bei höheren oder niederen Drücken getrocknet werden.

Die mit nichtionischen Emulgatoren oberflächenbehandelten Metallpulver haben den Vorteil, daß die Wasserstoffentwicklung in wäßrigen Beschichtungszusammensetzungen unterdrückt wird. Das mit nichtionischen Emulgatoren oberflächenbehandelte Zinkpulver hat zusätzlich den Vorteil, daß die kathodische Schutzwirkung des Zinkes erhalten bleibt.

Die erfindungsgemäßen, mit nichtionischen Emulgatoren oberflächenbehandelten Metallpulver können in allen wäßrigen Beschichtungszusammensetzungen, insbesondere in allen wäßrigen, Organosiliciumverbindungen enthaltenden Beschichtungszusammensetzungen, verwendet werden, in denen auch bisher Metallpulver verwendet wurden.

Beispiele für wäßrige Beschichtungszusammensetzungen, in denen die erfindungsgemäßen, mit nichtionischen Emulgatoren oberflächenbehandelten Metallpulver verwendet werden, sind solche auf Wasserbasis von Epoxidharzen, Maleinatharzen, gesättigten Polyesterharzen, Alkydharzen, Harnstoffharzen, Melaminharzen, Polymethacrylaten.

Bevorzugt werden als wäßrige, Organosiliciumverbindungen enthaltende Beschichtungszusammensetzungen solche enthaltend

(A) wäßrige Bindemittel enthaltend

(a) Organopolysiloxanharze,
(b) Monoorganosilanolate und/oder dessen durch Wasserabspaltung entstehende Kondensationsprodukte,
(c) wäßrige Lösungen kolloider Kieselsäuren und
(d) Wasser,

(B) mit nichtionischen Emulgatoren oberflächenbehandelte Metallpulver
(C) gegebenenfalls Füllstoffe und/oder Pigmente
(D) gegebenenfalls Wasser

verwendet.

Diese wäßrigen Beschichtungszusammensetzungen ergeben bei Raumtemperatur harte Überzüge. Durch die Zugabe von wäßrigen Lösungen kolloider Kieselsäuren (c) weisen die Überzüge gute Trocknungszeiten und gute Wasser- und Lösungsmittelbeständigkeiten auf. Durch den Einsatz der erfindungsgemäßen, mit nichtionischen Emulgatoren oberflächenbehandelten Metallpulver wird die Wasserstoffentwicklung auch im alkalischen Bereich wirksam unterdrückt.

Die wäßrigen, Organosiliciumverbindungen enthaltenden Beschichtungszusammensetzungen werden vorzugsweise hergestellt durch Vermischen von

(A) wäßrigen Bindemitteln mit
(B) mit nichtionischen Emulgatoren oberflächenbehandelten Metallpulvern,
(C) gegebenenfalls Füllstoffen und/oder Pigmenten und
(D) gegebenenfalls Wasser sowie gegebenenfalls weiteren Stoffen.

Die Bindemittel (A) werden hergestellt durch Vermischen von wäßrigen Emulsionen von Organopolysiloxanharzen (a) mit wäßrigen Lösungen von Monoorganosilanolaten (b),

(c) wäßrigen Lösungen kolloider Kieselsäuren und

(d) Wasser.

Als Organopolysiloxanharze (a) werden bei den Bindemitteln (A) vorzugsweise solche aus Einheiten der Formel

$$R_a SiO_{\frac{4-a}{2}} \qquad (I),$$

die 0 bis 70 Gew.-% Si-gebundene Hydroxylgruppen und/oder Alkoxygruppen enthalten,
wobei R gleich oder verschieden ist und einen einwertigen Kohlenwasserstoffrest mit 1 bis 18 Kohlenstoffatomen je Rest und
a 0, 1, 2 oder 3, durchschnittlich 1 bis 1,5, bedeutet, verwendet.

Es können bei Raumtemperatur flüssige oder feste Organopolysiloxanharze (a) eingesetzt werden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest. Bevorzugt ist der Methyl- und Phenylrest.

Bei den eingesetzten Organopolysiloxanharzen (a) kann es sich um eine Art von Organopolysiloxanharz oder um ein Gemisch von mindestens zwei verschiedenen Arten von Organopolysiloxanharzen handeln.

Als Monoorganosilanolate (b) werden bei den Bindemitteln (A) vorzugsweise solche der Formel

$$R^1 Si(OM)_m(OH)_{3-m} \qquad (II),$$

wobei $R^1$ gleich oder verschieden ist und einen einwertigen Kohlenwasserstoffrest mit 1 bis 8 Kohlenstoffatomen je Rest,
M ein Alkalimetallkation oder eine Ammoniumgruppe und
m eine ganze oder gebrochene Zahl im Wert von 0,1 bis 3 bedeutet,

verwendet.

Beispiele für Reste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste.

Ein bevorzugtes Beispiel für den Rest $R^1$ ist der Methylrest.

Beispiele für Reste M sind die Kationen der Alkalimetalle, wie die von Lithium, Natrium und Kalium, sowie Reste der Formel

$$^+NR^2_4,$$

wobei $R^2$ gleich oder verschieden ist und einen einwertigen Kohlenwasserstoffrest mit 1 bis 6 Kohlenstoffen je Rest bedeutet.

Bevorzugte Beispiele für Reste M sind $Na^+$ und $K^+$.

Beispiele für Reste $R^2$ sind Alkylreste, wie Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Bei den eingesetzten Monoorganosilanolaten (b) kann es sich um eine Art oder auch um ein Gemisch aus mindestens zwei verschiedenen Arten derartiger Monoorganosilanolate handeln.

Zur Herstellung der eingesetzten wäßrigen Emulsionen von Organopolysiloxanharzen werden Organopolysiloxanharze (a) nach den in der Silicon-Chemie üblichen Verfahren mit Wasser unter Zugabe von Emulgatoren emulgiert. Dabei kann der Emulgator, seiner chemischen Beschaffenheit entsprechend, sowohl in der Wasserphase als auch in der Ölphase vorgelegt werden. Der Emulgierschritt kann in üblichen, zur Herstellung von Emulsionen geeigneten Mischgeräten, wie schnellaufenden Stator-Rotor-Rührgeräten nach Prof. P. Willems, wie sie unter der registrierten Marke "Ultra-Turrax" bekannt sind, erfolgen.

Die eingesetzten wäßrigen Emulsionen enthalten Organopolysiloxanharze (a) vorzugsweise in Mengen von 25 bis 75 Gew.-%, bevorzugt 40 bis 60 Gew.-%, jeweils bezogen auf das Gesamtgewicht der wäßrigen Emulsionen.

Bei der Herstellung der wäßrigen Emulsionen können als Emulgatoren alle bisher bekannten, ionischen und nicht-ionischen Emulgatoren sowohl einzeln als auch in Mischungen verschiedener Emulgatoren eingesetzt werden, mit denen auch bisher beständige wäßrige Emulsionen von Organopolysiloxanharzen hergestellt werden konnten. Es können auch solche Emulgiermittel, wie sie in US-A 4,757,106 beschrieben sind, eingesetzt werden. Vorzugsweise werden nicht-ionische Emulgatoren eingesetzt. Beispiele für nicht-ionische Emulgatoren sind Fettalkoholpolyglycolether und teilverseifte Polyvinylalkohole. Fettalkoholpolyglycolether sind beispielsweise unter dem Handelsnamen "Arlypon® SA4" oder "Arlypon® IT16" bei der Fa. Grünau und teilverseifte Polyvinylalkohole beispielsweise unter dem Handelsnamen "Polyviol® W25/140" bei der Fa. Wacker erhältlich.

Die eingesetzten wäßrigen Emulsionen enthalten Emulgatoren in Mengen von vorzugsweise 0,1 bis 50 Gew.-%, bevorzugt 2 bis 4 Gew.-%, jeweils bezogen auf das Gesamtgewicht der wäßrigen Emulsionen.

Die eingesetzten wäßrigen Lösungen von Monoorganosilanolaten und/oder dessen durch Wasserabspaltung entstehende Kondensationsprodukte (b) enthalten Monoorganosilanolate in Mengen von vorzugsweise 10 bis 70 Gew.-%, bevorzugt 40 bis 50 Gew.-%, jeweils bezogen auf das Gesamtgewicht der wäßrigen Lösungen.

Die eingesetzten wäßrigen Lösungen von Monoorganosilanolaten (b) werden beispielsweise hergestellt durch Hydrolyse von Organotrichlorsilanen, wie Methyltrichlorsilanen, und anschließendes Lösen des Hydrolysats in einer wäßrigen Lösung eines Alkalihydroxids, wie Kaliumhydroxid.

Bei dem Verfahren zur Herstellung der erfindungsgemäßen wäßrigen Bindemittel (A) werden die wäßrigen Lösungen von (b) Monoorganosilanolaten und/oder dessen durch Wasserabspaltung entstehende Kondensationsprodukte in Mengen von vorzugsweise 0,1 bis 50 Gew.-%, bevorzugt 2 bis 10 Gew.-%, jeweils bezogen auf das Gesamtgewicht der wäßrigen Emulsionen von Organopolysiloxanharzen (a), eingesetzt.

Die eingesetzten wäßrigen Lösungen kolloider Kieselsäuren (c) enthalten Kieselsäuren in Mengen von vorzugsweise 10 bis 90 Gew.-%, bevorzugt 40-50 Gew.-%, jeweils bezogen auf das Gesamtgewicht der wäßrigen Lösungen.

Als wäßrige Lösung kolloider Kieselsäuren (c) wird besonders bevorzugt das Produkt Borchibond 145, käuflich erwerblich bei der Fa. Gebr. Borchers in Goslar, Deutschland, das Kieselsäuren in Mengen von 45 bis 47 Gew.-%, jeweils bezogen auf das Gesamtgewicht der wäßrigen Lösung, enthält, eingesetzt.

Als wäßrige Lösung kolloidaler Kieselsäuren (c) kann beispielsweise auch das Produkt Bayer Kieselsol 200, käuflich erwerblich bei der Fa. Bayer AG in Leverkusen, Deutschland, das Kieselsäuren in Mengen von ca. 30 Gew.-%, bezogen auf das Gesamtgewicht der wäßrigen Lösung, enthält, eingesetzt werden.

Bei dem Verfahren zur Herstellung der wäßrigen Bindemittel (A) werden die wäßrigen Lösungen kolloider Kieselsäuren (c) in Mengen von vorzugsweise 0,1 bis 200 Gew.-%, bevorzugt 80 bis 120 Gew.-%, jeweils bezogen auf das Gesamtgewicht der wäßrigen Emulsionen von Organopolysiloxanharzen (a), eingesetzt.

Bei dem Verfahren zur Herstellung der wäßrigen Bindemittel (A) wird Wasser (d) in Mengen von vorzugsweise 0,1 bis 200 Gew.-%, bevorzugt 80 bis 120 Gew.-%, jeweils bezogen auf das Gesamtgewicht der wäßrigen Emulsionen von Organopolysiloxanharzen (a), eingesetzt.

Beispiele für gegebenenfalls mitverwendete Füllstoffe (C) sind Siliciumdioxide mit einer BET-Oberfläche von mindestens 50 m$^2$/g, wie pyrogen hergestellte und gefällte Kieselsäuren. Die Siliciumdioxide können hydrophobiert sein, beispielsweise durch die Behandlung mit Organosiliciumverbindungen, wie Hexamethyldisilazan, Organosilanen oder Organosiloxanen.

Weitere Beispiele für Füllstoffe (C) sind Quarz, Calcit, Dolomit, Diatomeenerde, Zeolithe, Montmorrillonite, wie Bentonite, Kaolin, Kreide, Talkum, Glimmer, Gips, Ruß, Siliciumnitrid, Bornitrid, Keramik-, Glas- und Kunststoffpulver.

Als gegebenenfalls mitverwendete Pigmente (C) werden vorzugsweise bunte und unbunte Farbmittel, wie Metallverbindungen, eingesetzt. Beispiele für Pigmente (C) sind Metalloxide, wie Aluminium-, Titan-, Eisen- und Zinkoxide bzw. deren Mischoxide, Metallsulfide, Metallcarbonate, wie Calciumcarbonat, Metallsilikate, wie Calciumsilikat und Zirkoniumsilikat, Metallsulfate, wie Bariumsulfat, Chromate, wie Zinkchromat, Eisenglimmer, Graphit und Siliciumcarbid.

Die wäßrigen, Organosiliciumverbindungen enthaltenden Beschichtungszusammensetzungen enthalten vorzugsweise

(A) 100 Gew.-teile wäßrige Bindemittel,

(B) 10 bis 2000 Gew.-teile, bevorzugt 300 bis 700 Gew.-teile, mit nichtionischen Emulgatoren oberflächenbehandelte Metallpulver

(C) 0 bis 2000 Gew.-teile, bevorzugt 10 bis 50 Gew.-teile, Füllstoffe und/oder Pigmente

(D) 0 bis 300 Gew.-teile, bevorzugt 50 bis 150 Gew.-teile, Wasser.

Die wäßrigen, Organosiliciumverbindungen enthaltenden Beschichtungszusammensetzungen können weitere Stoffe enthalten, die üblicherweise bei der Herstellung von Beschichtungszusammensetzungen mitverwendet werden können. Beispiele für weitere Stoffe sind Verdickungsmittel, Korrosionsinhibitoren, wie Natriumphosphat, Zinkphosphate und Zinkaluminiumphosphate, Verlaufsadditive, Antischaummittel, Dispergierhilfsmittel, Benetzungshilfsmittel und Haftvermittler.

Die wäßrigen, Organosiliciumverbindungen enthaltenden Beschichtungszusammensetzungen können als 1-Komponenten-Systeme oder als 2-Komponenten-Systeme eingesetzt werden. Bei den 2-Komponenten-Systemen befindet sich Metallpulver (B), bevorzugt Zinkpulver, in der ersten Komponente und die wäßrigen Bindemittel (A) in der zweiten Komponente.

Die wäßrigen Beschichtungszusammensetzungen, die die erfindungsgemäßen oberflächenbehandelten Metallpulver enthalten, können auf jede Art von Metall aufgebracht werden, auf die auch bisher Metallpulver, insbesondere Zinkpulver, enthaltende Beschichtungszusammensetzungen aufgebracht worden sind. Unter Metallen sind in diesem Sinne auch Metallegierungen zu verstehen. Beispiele für Metalle sind Eisen und Stähle.

Beispiele für die, die erfindungsgemäßen oberflächenbehandelten Metallpulver enthaltenden, wäßrigen Beschichtungszusammensetzungen sind Lacke und Farben.

Die wäßrigen, Organosiliciumverbindungen enthaltenden Beschichtungszusammensetzungen werden vorzugsweise bei 0 bis 70°C, bevorzugt 20 bis 40°C getrocknet.

Die wäßrigen, Organosiliciumverbindungen enthaltenden Beschichtungszusammensetzungen werden als hitze- oder nichthitzebeständige und korrosionsbeständige Lacke oder Farben oder Grundierungsmittel verwendet. Sie ergeben Überzüge mit guten Temperaturbeständigkeiten und eignen sich daher für viele Einsatzgebiete, in denen Hitzebeständigkeit bis 1000°C gefordert wird, z. B. zur Herstellung von Überzügen bei Tankern, Brücken, Bohrinseln, Kränen, Öfen, Herdplatten, Ofenrohren, Raffinerien, Verbrennungs- und Elektromotoren und Auspuffanlagen.

in den folgenden Beispielen beziehen sich alle Angaben von Teilen und Prozentsätzen auf das Gewicht, soweit nichts anderes angegeben ist.

**Beispiel 1**

79 g eines unter dem Handelsnamen Zn 615 bei der Fa. Anker käuflich erwerblichen Zinkpulvers mit einer durchschnittlichen Korngröße von 4-6 µm wurden mit 20 g Xylol aufgeschlämmt. in das Gemisch wurde dann der in der Tabelle 1 angegebene Emulgator in der in der Tabelle 1 angegebenen Menge mit einem Flügelrührer 10 Minuten lang eingerührt. Das so behandelte Zinkpulver wurde anschließend abfiltriert und an der Luft getrocknet.

Folgende Emulgatoren wurden eingesetzt:

E1 = Isotridecyl-(16)-polyglykolether (käuflich erwerblich unter dem Handelsnamen Arlypon[R] IT 16 bei der Fa. Grünau)

E2 = Isotridecyl-(10)-polyglykolether (käuflich erwerblich unter dem Handelsnamen Arlypon[R] IT 10 bei der Fa. Grünau)

E3 = partieller Pentaerythritstearinsäureester (käuflich erwerblich unter dem Handelsnamen Emulgator S bei der Fa. Grünau)

40 g des getrockneten, oberflächenbehandelten Zinkpulvers wurden mit 50 g Wasser aufgeschlämmt und die zeitabhängige Wasserstoffentwicklung gemessen. Als Vergleich wurde unbehandeltes Zinkpulver Zn 615 eingesetzt. Die Ergebnisse sind in Tabelle 1 zusammengefaßt.

**Vergleichsversuch 1**

Die Arbeitsweise von Beispiel 1 wurde wiederholt mit der Abänderung, daß anstelle der in Beispiel 1 verwendeten nicht-ionischen Emulgatoren ein anionischer Emulgator, Alkylbenzolsulfonsäure (= VI) eingesetzt wurde. Die Ergebnisse sind in Tabelle 1 zusammengefaßt.

Tabelle 1

| | Wasserstoffbildung in ml | | | | | | | |
|---|---|---|---|---|---|---|---|---|
| | 24h | 48h | 72h | 96h | 120h | 144h | 168h | 192h |
| Zn unbehandelt | 5 | 9 | 15 | - | - | 22 | 26 | 29 |

Tabelle 1  (fortgesetzt)

| | Wasserstoffbildung in ml | | | | | | | |
|---|---|---|---|---|---|---|---|---|
| | 24h | 48h | 72h | 96h | 120h | 144h | 168h | 192h |
| Zn+1,25%*E1 | 4 | 6 | - | - | 17 | 20 | - | 27 |
| Zn+1,9%*E1 | 1 | 1 | 1 | - | - | - | - | - |
| Zn+7,6%*E1 | 3 | 5 | 7 | - | - | 8 | 9 | 33 |
| Zn+1,25%*E2 | 0 | 0 | - | - | - | - | - | - |
| Zn+1,9%*E2 | 3 | 4 | 4 | - | 4 | - | 4 | 4 |
| Zn+1,2%*E3 | 4 | 6 | 10 | 13 | - | - | 23 | - |
| Zn+1,25%*V1 | 2 | 4 | - | - | 53 | 58 | - | 63 |

*Gew.-%, bezogen auf das Gesamtgewicht des eingesetzten Zinkpulvers

**Beispiel 2**

Die Arbeitsweise von Beispiel 1 wurde wiederholt mit der Abänderung, daß anstelle des Zinkpulvers Aluminiumpulver (käuflich erwerblich unter dem Handelsnamen Aluminiumpulver Spezialschliff C.T.n.1. bei der Fa. Eckart GmbH, Fürth) verwendet wurde. Als Emulgator wurde E1 = Isotridecyl-(16)-polyglykolether (käuflich erwerblich unter dem Handelsnamen Arlypon$^R$ IT 16 bei der Fa. Grünau) in Mengen von 1,9 Gew.-%, bezogen auf das Gesamtgewicht des eingesetzten Aluminiumpulvers verwendet. Als Vergleich wurde unbehandeltes Aluminiumpulver eingesetzt. Die Ergebnisse sind in Tabelle 2 zusammengefaßt.

Tabelle 2

| | Wasserstoffbildung in ml | |
|---|---|---|
| | 24h | 48h |
| Al unbehandelt | 73 | >100 |
| Al+1,9%E1 | 3 | >100 |

**Beispiel 3**

25,0 g einer 42%igen wäßrigen Emulsion eines Methylphenylsiliconharzes, die einen nichtionogenen Emulgator enthält, eine Viskosität (Brookfield DV-II Sp.2, 100UpM) von 40mPa·s bei 25°C besitzt, einen pH-Wert von 7 aufweist und unter dem Handelsnamen SILRES$^R$ MP 42 E bei der Fa. Wacker-Chemie GmbH erhältlich ist,
2,0 g einer ca 42%igen wäßrigen Lösung eines Kaliummethylsilanolates, die käuflich erwerblich unter dem Handelsnamen Wacker BS 15 bei der Fa. Wacker-Chemie GmbH ist,

25,0 g einer ca. 45%igen wäßrigen Lösung einer kolloiden Kieselsäure, die käuflich erwerblich unter dem Handelsnamen Borchibond 145 bei der Fa. Gebr. Borchers ist, und
25,0 g Wasser wurden miteinander vermischt.

Die so erhaltene Mischung wurde vermischt mit

20,0 g einer 3%igen Aufschlämmung von Bentonepaste LT in Wasser (Bentone LT ist bei der Fa. Rheox käuflich erwerblich),
2,6 g eines unter dem Handelsnamen Heucophos ZPA bei der Fa. Heubach käuflich erwerblichen Zinkaluminiumphosphats,
29,9 g eines unter dem Handelsnamen Glimmer SC bei der Fa. Microfine Minerals and Chemicals käuflich erwerblichen Glimmers, und
400 g des in Beispiel 1 beschriebenen Zinkpulvers, das mit 1,9 Gew.-% des Emulgators E1 (E1 = Isotridecyl-(16)-polyglykolether, käuflich erwerblich unter dem Handelsnamen ArlyponR IT 16 bei der Fa. Grünau) behandelt wurde.

Die so erhaltene Zinkfarbe wies einen pH-Wert von ca. 10 und eine Lagerbeständigkeit bei 70°C von 4 Tagen auf. Weder nach 24 Stunden noch nach 4 Tagen wurde eine Wasserstoffentwicklung beobachtet.
Die so erhaltene Zinkfarbe wurde mit einer Rakel in einer Naßfilmschichtdicke von 100 µm auf kaltgewalzten, matten Stahl einer Stärke von 0,8 mm aufgetragen. Der Überzug war nach 18 Minuten Trocknen bei Raumtemperatur griffest.

Nach 24stündigem Trocknen bei Raumtemperatur wurde von dem Überzug die Beständigkeit gegen Lösungsmittel bzw. Wasser geprüft durch Reiben unter leichtem Druck mit einem Wattestäbchen, dessen Ende mit Methylethylketon bzw. Wasser getränkt war. Der Überzug zeigte eine Wasserbeständigkeit von mehr als 150 Wasserrieben und eine Lösungsmittelbeständigkeit von 9 MEK-Rieben.

Der getrocknete Überzug war mit dem Epoxidharz Epikote 1001 (käuflich erwerblich bei der Fa. Shell) überlackierbar.

Das mit der Zinkfarbe überzogene Stahlblech wurde einem Salzsprühtest nach DIN 50021 mit 5%iger wäßriger Natriumchloridlösung unterworfen. Die Bewertungszahl nach DIN 53210 richtet sich nach dem Anteil der mit Rost befallenen Oberfläche. Dabei bedeutet die Bewertungszahl 0 rostfrei und die Bewertungszahl 5 ganzflächiger Rostbefall.

In einem Zeitraum von 7 Tagen lag im Salzsprühtest die Bewertungszahl für das mit der Zinkfarbe überzogene Stahlblech zwischen 0 und 1.

**Vergleichsversuch 2**

Die Arbeitsweise von Beispiel 3 wurde wiederholt mit der Abänderung, daß anstelle des mit Emulgator E1 behandelten Zinkpulvers unbehandeltes Zinkpulver (käuflich erwerblich unter dem Handelsnamen Zn 615 bei der Fa. Anker) eingesetzt wurde, daß keine wäßrige Lösung einer kolloiden Kieselsäure mitverwendet wurde und daß 30 g Wasser anstelle von 25 g Wasser eingesetzt wurde.

Die Wasserstoffentwicklung von 50 ml der so erhaltenen Zinkfarbe betrug 3 ml nach 24 Stunden und 35 ml nach 4 Tagen, d.h. es ist ein deutlicher Unterschied zu Beispiel 3 zu erkennen.

Die so erhaltene Zinkfarbe wurde mit einer Rakel in einer Naßfilmschichtdicke von 100μm auf kaltgewalzten, matten Stahl einer Stärke von 0,8 mm aufgetragen. Der Überzug war nach 2 Stunden Trocknen bei Raumtemperatur griffest, d.h., das Trocknungsverhalten ist wesentlich schlechter als das von Beispiel 3.

Nach 24 Stunden Trocknen bei Raumtemperatur wurde von dem Überzug die Beständigkeit gegen Wasser bzw. Lösungsmittel, wie in Beispiel 3 beschrieben, geprüft. Der Überzug zeigte eine Wasserbeständigkeit von 4 Wasserrieben und eine Lösungsmittelbeständigkeit von 4 MEK-Rieben, d.h., die Beständigkeit gegen Wasser und Lösungsmittel ist deutlich schlechter als bei dem Überzug von Beispiel 3.

Der Salzsprühtest wurde wie in Beispiel 3 beschrieben durchgeführt. Über einen Zeitraum von 3 Tagen lag im Salzsprühtest die Bewertungszahl für das mit der Zinkfarbe überzogene Stahlblech zwischen 0 und 1, d.h., die Korrosionsbeständigkeit ist deutlich schlechter als in Beispiel 3.

**Beispiel 4**

Die Arbeitsweise von Beispiel 3 wurde wiederholt mit der Abänderung, daß 25,0 g eines ca. 30%igen Kieselsols, käuflich erwerblich unter dem Handelsnamen Bayer Kieselsol 200 bei der Fa. Bayer AG, anstelle von 250 g Borchibond 145 und 32,5 g anstelle von 29,9g Glimmer SC und kein Heucophos ZPA eingesetzt wurde.

Die Wasserstoffbildung von 50 ml einer auf diese Weise hergestellten Zinkfarbe betrug 0 ml nach 24 Stunden und ebenfalls 0 ml nach 4 Tagen.

Die so erhaltene Zinkfarbe wurde mit einer Rakel in einer Naßfilmschichtdicke von 100 μm auf kaltgewalzten, matten Stahl einer Stärke von 0,8 mm aufgetragen. Der Überzug war nach 15 Minuten Trocknen bei Raumtemperatur griffest.

Nach 24stündigem Trocknen bei Raumtemperatur wurde von dem Überzug die Beständigkeit gegen Lösungsmittel bzw. Wasser wie in Beispiel 3 beschrieben, geprüft. Der Überzug zeigte eine Wasserbeständigkeit von mehr als 100 Wasserrieben und eine Lösungsmittelbeständigkeit von 13 MEK-Rieben.

Der getrocknete Überzug war mit dem Epoxidharz Epikote 1001 (käuflich erwerblich bei der Fa. Shell) überlackierbar.

Das mit der Zinkfarbe überzogene Stahlblech wurde einem Salzsprühtest nach DIN 50021 mit 5%iger wäßriger Natriumchloridlösung unterworfen. Die Bewertungszahl nach DIN 53210 richtet sich nach dem Anteil der mit Rost befallenen Oberfläche. Dabei bedeutet die Bewertungszahl 0 rostfrei und die Bewertungszahl 5 ganzflächiger Rostbefall.

In einem Zeitraum von 13 Tagen lag im Salzsprühtest die Bewertungszahl für das mit der Zinkfarbe überzogene Stahlblech zwischen 0 und 1.

**Patentansprüche**

1. Verwendung der mit nichtionischen Emulgatoren oberflächenbehandelten Metallpulver herstellbar durch Vermischen von Gemischen von Metallpulver und Lösungsmitteln mit nichtionischen Emulgatoren, Abtrennen der Lösungsmittel und Trocknen der so erhaltenen oberflächenbehandelten Metallpulver in wäßrigen, Organosiliciumverbindungen enthaltenden Beschichtungszusammensetzungen.

2. Verwendung nach Anspruch 1, dadurch gekennzeichnet, daß als Metallpulver Zinkpulver verwendet werden.

3. Verwendung nach Anspruch 1 oder 2, dadurch gekennzeichnet, daß als nichtionische Emulgatoren Fettalkoholpolyglykolether und (partielle) Fettsäureester mehrwertiger Alkohole verwendet werden.

4. Verwendung der mit nichtionischen Emulgatoren oberflächenbehandelten Metallpulver (B) nach Anspruch 1, 2 oder 3, dadurch gekennzeichnet, daß als wäßrige Organosiliciumverbindungen enthaltende Beschichtungszusammensetzungen solche enthaltend

    (A) wäßrige Bindemittel enthaltend

        (a) Organopolysiloxanharze,
        (b) Monoorganosilanolate und/oder dessen durch Wasserabspaltung entstehende Kondensationsprodukte,
        (c) wäßrige Lösungen kolloider Kieselsäuren und
        (d) Wasser,

    (C) gegebenenfalls Füllstoffe und/oder Pigmente und
    (D) gegebenenfalls Wasser eingesetzt werden.

5. Verwendung nach Anspruch 4, dadurch gekennzeichnet, daß als Organopolysiloxanharze (a) solche aus Einheiten der Formel

$$R_a SiO_{\frac{4-a}{2}} \qquad (I) ,$$

    die 0 bis 70 Gew.-% Si-gebundene Hydroxylgruppen und/oder Alkoxygruppen enthalten,

    wobei R gleich oder verschieden ist und einen einwertigen Kohlenwasserstoffrest mit 1 bis 18 Kohlenstoffatomen je Rest und
    a 0, 1, 2 oder 3, durchschnittlich 1 bis 1,5, bedeutet, verwendet werden.

6. Verwendung nach Anspruch 4, dadurch gekennzeichnet, daß als Monoorganosilanolate (b) solche der Formel

$$R^1 Si(OM)_m (OH)_{3-m} \qquad (II) ,$$

    wobei R[1] gleich oder verschieden ist und einen einwertigen Kohlenwasserstoffrest mit 1 bis 8 Kohlenstoffatomen je Rest,
    M ein Alkalimetallkation oder eine Ammoniumgruppe und
    m eine ganze oder gebrochene Zahl im Wert von 0,1 bis 3 bedeutet, verwendet werden.

7. Verwendung nach Anspruch 4, 5 oder 6, dadurch gekennzeichnet, daß die wäßrigen Beschichtungszusammensetzungen

    (A) 100 Gew.-teile wäßrige Bindemittel
    (B) 10 bis 2000 Gew.-teile mit nichtionischen Emulgatoren oberflächenbehandelte Metallpulver nach Anspruch 1, 2 oder 3
    (C) 0 bis 2000 Gew.-teile Füllstoffe und/oder Pigmente und
    (D) 0 bis 300 Gew.-teile Wasser

enthalten.

8.  Verwendung nach einem der Ansprüche 4 bis 7, dadurch gekennzeichnet, daß die wäßrigen Beschichtungszusammensetzungen hergestellt werden, indem

    (A) wäßrige Bindemittel mit
    (B) mit nichtionischen Emulgatoren oberflächenbehandelten Metallpulvern nach Anspruch 1, 2 oder 3
    (C) gegebenenfalls Füllstoffen und/oder Pigmenten und
    (D) gegebenenfalls Wasser

    sowie gegebenenfalls weiteren Stoffen vermischt werden.

## Claims

1.  Use of the metal powders surface-treated with nonionic emulsifiers, which can be prepared by mixing mixtures of metal powder and solvents with nonionic emulsifiers, separating off the solvents and drying the surface-treated metal powders thus obtained in aqueous coating compositions comprising organosilicon compounds.

2.  Use according to Claim 1, characterized in that the metal powders used are zinc powders.

3.  Use according to Claim 1 or 2, characterized in that the nonionic emulsifiers used are fatty alcohol polyglycol ethers and (partial) fatty acid esters of polyhydric alcohols.

4.  Use of the metal powders (B) surface-treated with nonionic emulsifiers, according to Claim 1, 2 or 3, characterized in that the aqueous coating compositions comprising organosilicon compounds used are those comprising

    (A) aqueous binders comprising

        (a) organopolysiloxane resins,
        (b) monoorganosilanolates and/or their condensation products formed by elimination of water,
        (c) aqueous solutions of colloidal silicic acids and
        (d) water,

    (C) if desired, fillers and/or pigments and
    (D) if desired, water.

5.  Use according to Claim 4, characterized in that the organopolysiloxane resins (a) used are those comprising units for the formula

$$R_a SiO_{\frac{4-a}{2}} \qquad (I),$$

which contain from 0 to 70 % by weight of Si-bonded hydroxyl groups and/or alkoxy groups,

in which each R is identical or different and is a monovalent hydrocarbon radical having 1 to 18 carbon atoms per radical, and
a is 0, 1, 2 or 3, on average from 1 to 1.5.

6.  Use according to Claim 4, characterized in that the monoorganosilanolates (b) used are those of the formula

$$R^1 Si(OM)_m(OH)_{3-m} \qquad (II),$$

in which $R^1$ is identical or different and is a monovalent hydrocarbon radical having 1 to 8 carbon atoms per radical,
M is an alkali metal cation or an ammonium group, and

m is an integral or fractional number whose value is from 0.1 to 3.

7. Use according to Claim 4, 5 or 6, characterized in that the aqueous coating compositions comprise

(A) 100 parts by weight of aqueous binders,
(B) from 10 to 2000 parts by weight of metal powders surface-treated with nonionic emulsifiers according to Claim 1, 2 or 3
(C) from 0 to 2000 parts by weight of fillers and/or pigments and
(D) from 0 to 300 parts by weight of water.

8. Use according to one of Claims 4 to 7, characterized in that the aqueous coating compositions are prepared by

(A) mixing aqueous binders with
(B) metal powders surface-treated with nonionic emulsifiers, according to Claim 1, 2 or 3
(C) if desired, fillers and/or pigments, and
(D) if desired, water

and also, if desired, further substances.

**Revendications**

1. Utilisation de poudres métalliques à surface traitée avec des émulsionnants non ioniques, qui peuvent être préparées par mélange de mélanges de poudres métalliques et de solvants avec des émulsionnants non ioniques, par séparation des solvants et par séchage des poudres métalliques à surface traitée ainsi obtenues, dans des compositions aqueuses de revêtement contenant des composés organosiliciés.

2. Utilisation suivant la revendication 1, caractérisée en ce que les poudres métalliques utilisées sont des poudres de zinc.

3. Utilisation suivant la revendication 1 ou 2, caractérisée en ce que les émulsionnants non ioniques utilisés sont des éthers de polyglycol d'alcool gras et des esters (partiels) d'acide gras et d'alcools polyvalents.

4. Utilisation des poudres métalliques (B) à surface traitée avec des émulsionnants non ioniques suivant la revendication 1, 2 ou 3, caractérisée en ce que les compositions aqueuses de revêtement contenant des composés organosiliciés utilisées sont celles qui contiennent :

(A) des liants aqueux contenant :

(a) des résines d'organopolysiloxane;
(b) des monoorganosilanolates et/ou leurs produits de condensation formés par séparation d'eau;
(c) des solutions aqueuses d'acides siliciques colloïdaux, et
(d) de l'eau;

(C) le cas échéant des charges et/ou des pigments, et
(D) le cas échéant de l'eau.

5. Utilisation suivant la revendication 4, caractérisée en ce que les résines d'organopolysiloxane (a) utilisées sont celles formées d'unités de formule :

$$R_a SiO_{\frac{4-a}{2}} \qquad (I),$$

qui contiennent 0 à 70% en poids de groupements hydroxyle et/ou de groupements alkoxy liés au Si,

R étant identique ou différent et signifiant un radical hydrocarboné monovalent avec 1 à 18 atomes de carbone par radical, et

a signifiant 0, 1, 2 ou 3, en moyenne 1 à 1,5.

6. Utilisation suivant la revendication 4, caractérisée en ce que les monoorganosilanolates (b) utilisés sont ceux de formule :

$$R^1 Si(OM)_m(OH)_{3-m} \qquad (II) ,$$

dans laquelle $R^1$ est identique ou différent et signifie un radical hydrocarboné monovalent avec 1 à 8 atomes de carbone par radical,
M signifie un cation de métal alcalin ou un groupement ammonium, et
m signifie un nombre entier ou fractionnaire d'une valeur de 0,1 à 3.

7. Utilisation suivant la revendication 4, 5 ou 6, caractérisée en ce que les compositions aqueuses de revêtement contiennent :

(A) 100 parties en poids de liants aqueux;
(B) 10 à 2000 parties en poids de poudres métalliques à surface traitée avec des émulsionnants non ioniques suivant la revendication 1, 2 ou 3;
(C) 0 à 2000 parties en poids de charges et/ou de pigments, et
(D) 0 à 300 parties en poids d'eau.

8. Utilisation suivant l'une des revendications 4 à 7, caractérisée en ce que les compositions aqueuses de revêtement sont préparées en mélangeant :

(A) des liants aqueux avec
(B) des poudres métalliques à surface traitée avec des émulsionnants non ioniques suivant la revendication 1, 2 ou 3;
(C) le cas échéant des charges et/ou des pigments, et
(D) le cas échéant de l'eau,

et le cas échéant d'autres substances.